# EUROPEAN PATENT APPLICATION

(11) **EP 3 933 738 A1**
(43) Date of publication of application: **05.01.2022**
(21) Application number: 20845555.0
(22) Date of filing: 22.05.2020
(51) Int. Cl.: G06Q 20/42, G06Q 20/06, G06Q 30/02, G06Q 20/36

(54) **FUNDS MANAGEMENT SYSTEM, FUNDS MANAGEMENT METHOD, CONTRIBUTION MANAGEMENT SYSTEM, CONTRIBUTION MANAGEMENT METHOD, AND PROGRAM**

(30) Priority: 20.05.2020 JP 2020088496
(71) Applicant: ZEN Global Limited, Old Jewry London EC2R 8JQ (GB)
(72) Inventor: KAWASAKI Takasama, EC2R8JQ (GB)
(74) Representative: EIP
(86) International application number: PCT/JP2020/020418
(87) International publication number: WO 2021/234974

(57) **Abstract**

[Problem] To enable the management of monetary flows.

[Solution to Problem] A money management system comprising: a token issuing unit that issues a token of a blockchain according to an amount of transferred money from a transferor to a transferee; a token transfer processing unit that transfers the token in response to a transfer of all or part of the transferred money from the transferee; a transaction information aquisition unit that aquires transaction information indicating a transaction between accounts in a financial institution; a verification processing unit that verifies a correspondence between the transferred token and the transaction.

## Description

### [Technical Field]

The present invention relates to a money management system, money management method, donation management system, donation management method and program.

### [Background Art]

The receipts from donors are checked (See PTL 1)

### [Citation List]

### [Patent Literature]

[PTL 1] Patent Application Publication No. 2018-14567

### [Summary of Invention]

### [Technical Problem]

However, there is no control over how donations are distributed from the organization that collected donations to the final beneficiaries.

The present invention was made in light of this background, and is intended to provide technologies capable of managing the flow of money.

### [Solution to Problem]

The main invention for solving the above-described problem is a money management system comprising: a token issuing unit that issues a token of a blockchain according to an amount of transferred money from a transferor to a transferee; a token transfer processing unit that transfers the token in response to a transfer of all or part of the transferred money from the transferee; a transaction information acquisition unit that acquires transaction information indicating a transaction between accounts in a financial institution; a verification processing unit that verifies a correspondence between the transferred token and the transaction.

The other problems and methods for solving them disclosed in the present application are clarified in the sections and drawings of the embodiments of the invention.

### [Advantageous Effects of Invention]

According to the present invention, the flow of money can be managed.

### [Brief Description of Drawings]

[Fig. 1] Fig. 1 is a diagram illustrating the flow of donations.
[Fig. 2] Fig. 2 is a diagram illustrating the management of the flow of donations in the donation management system 10 according to the present embodiment.
[Fig. 3] Fig. 3 is a diagram illustrating an example of an overall configuration of a system according to the present embodiment.
[Fig. 4] Fig. 4 is a diagram illustrating an example of a hardware configuration of a computer.
[Fig. 5] Fig. 5 is a diagram illustrating an example of a software configuration of a donator terminal 11.
[Fig. 6] Fig. 6 is a diagram illustrating an example of a software configuration of a management server 20.
[Fig. 7] Fig. 7 is a diagram illustrating a structure of donation management in the donation management system according to the present embodiment.

### [Description of Embodiments]

### <Outline of the Invention>

The contents of embodiments of the present invention will be described with reference. The present invention includes, for example, the following configurations.
[Item 1] A money management system comprising:
   a token issuing unit that issues a token of a blockchain according to an amount of transferred money from a transferor to a transferee;
   a token transfer processing unit that transfers the token in response to a transfer of all or part of the transferred money from the transferee;
   a transaction information aquisition unit that aquires transaction information indicating a transaction between accounts in a financial institution;
   a verification processing unit that verifies a correspondence between the transferred token and the transaction.
[Item 2] A donation management comprising:
   a token issuing unit that issues a token of a blockchain according to an amount of donation;
   a token transfer processing unit that transfers the token in response to a remittance of the donation;
   a transaction information acquiring unit that acquires transaction information indicating a transaction between accounts in a financial institution;
   a verification processing unit that verifies a correspondence between the transferred token and the transaction.
[Item 3] The donation management system according to item 2, wherein:
   the token issuing unit issues the token according to the amount of the donation to the account of the donor in the blockchain;
   the token transfer processing unit transfers the token, in response to a remittance of the donation to a first account of an organization, from the account of the donator to an account of the organization in the blockchain;
   the token transfer processing unit transfers the token, in response to an input indicating that a remittance from the first account to a second account of a beneficiary, from the account of the organization to an account of the beneficiary in the blockchain;
   the transaction information acquiring unit acquires the transaction information representing a transaction from the first account to the second account;
   the verification processing unit verifies that the amount of the tokens transferred from the account of the organization to the account of the beneficiary corresponds to the amount transferred from the first account to the second account.
[Item 4] The donation management system according to item 3 further comprising:
   a certificate issuing unit that issues a certificate certifying that the the donation has been paid to the beneficiary if the verification is successful.
[Item 5] A donation management system according to item 3 or 4 further comprising:
   a tracking information display unit that displays an amount which has been remitted to the beneficiary from the donor for each donor, the amount within the amount of the donation from the donor.
[Item 6] A method executed by a computer to manage money, the method comprising:
   a step of issuing a token of a blockchain according to an amount of transferred money from a transferor to a transferee;
   a step of transferring the token in response to a transfer of all or part of the transferred money from the transferee;
   a step of acquiring transaction information indicating a transaction between accounts in a financial institution;
   a step of verifying a correspondence between a transfer of the token and the transaction.
[Item 7] A method executed by a computer to manage donation, the method comprising:
   a step of issuing a token of a blockchain according to an amount of donation;
   a step of transferring the token in response to a remittance of the donation;
   a step of acquiring transaction information indicating a transaction between accounts in a financial institution;
   a step of verifying a correspondence between the transfer of the token and the transaction.
[Item 8] A method executed by a computer to manage donation, the method comprising:
   a step of issuing a token according to an amount of a donation to an account of a donor in a blockchain;
   a step of transferring the token, in response to a remittance of the donation to a first account of an organization, from the account of the donator to an account of the organization in the blockchain;
   a step of transferring the token, in response to an input indicating that a remittance from the first account to a second account of a beneficiary, from the account of the organization to an account of the beneficiary in the blockchain;
   a step of acquiring the transaction information representing a transaction from the first account to the second account;
   a step of verifying that the amount of the tokens transferred from the account of the organization to the account of the beneficiary corresponds to the amount transferred from the first account to the second account.
[Item 9] A program causing a computer to execute:
   a step of issuing a token of a blockchain according to an amount of transferred money from a transferor to a transferee;
   a step of transferring the token in response to a transfer of all or part of the transferred money from the transferee;
   a step of acquiring transaction information indicating a transaction between accounts in a financial institution;
   a step of verifying a correspondence between a transfer of the token and the transaction.
[Item 10] A program causing a computer to execute:
   a step of issuing a token of a blockchain according to an amount of donation;
   a step of transferring the token in response to a remittance of the donation;
   a step of acquiring transaction information indicating a transaction between accounts in a financial institution;
   a step of verifying a correspondence between the transfer of the token and the transaction.
[Item 11] A program causing a computer to execute:
   a step of issuing a token according to an amount of a donation to an account of a donor in a blockchain;
   a step of transferring the token, in response to a remittance of the donation to a first account of an organization, from the account of the donator to an account of the organization in the blockchain;
   a step of transferring the token, in response to an input indicating that a remittance from the first account to a second account of a beneficiary, from the account of the organization to an account of the beneficiary in the blockchain;
   a step of acquiring the transaction information representing a transaction from the first account to the second account;
   a step of verifying that the amount of the tokens transferred from the account of the organization to the account of the beneficiary corresponds to the amount transferred from the first account to the second account.

### <Outline of Donation Management>

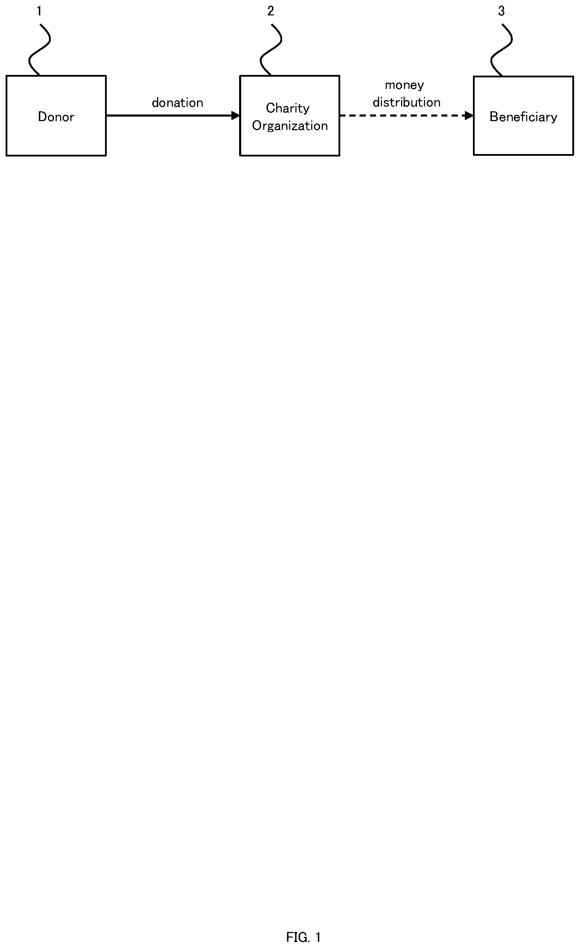

Fig. 1 is a diagram illustrating the flow of donations. The donations from the donors 1 will be collected in the charity organization 2 which raises donations, and all or part of the donations will be distributed from the charity organization 2 to the beneficiaries 3. When collecting donations, the payments from the donors 1 are often checked. However, how much money was provided to the beneficiaries 3 (or spent on other expenses) by the charity organization 2 could not be traced. Accordingly, the donation management system 10 in accordance with this embodiment is intended to figure out the flow of such donations.

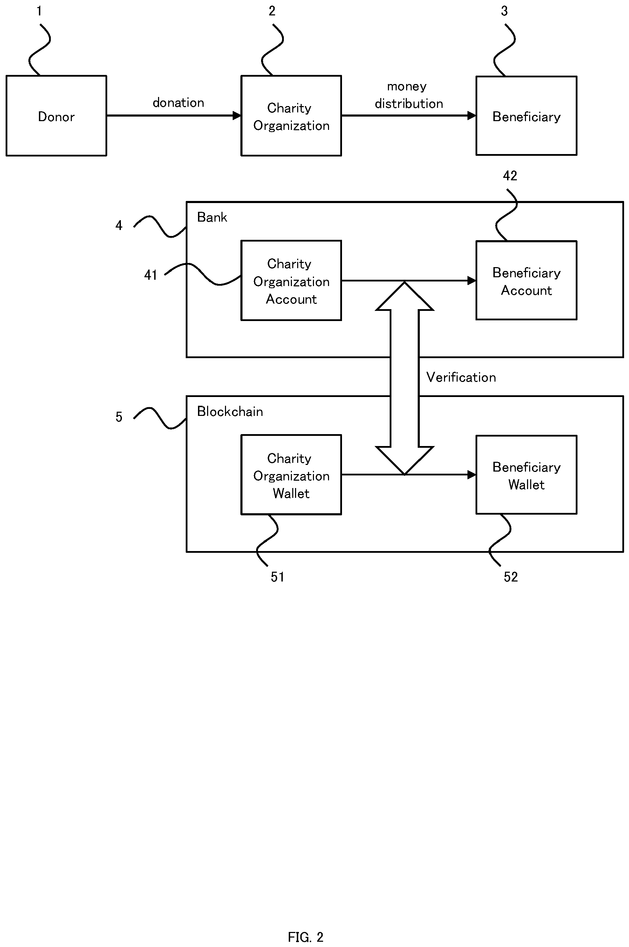

Fig. 2 is a diagram illustrating the management of the flow of donations in the donation management system 10 according to the present embodiment. The donation from the donor 1 is assumed to be deposited into the account 41 of the charity organization 2 at a financial institution (although bank 4 is assumed in this embodiment, it may be another type of financial institution if the institution is able to manage the legal currency). In the donation management system 10 of this embodiment, tokens of the blockchain 5 corresponding to the amount of donation are issued, and the tokens corresponding to the amount of money received in the account 41 in the bank 4 are placed in the wallet of the charity organization 2 (in this embodiment, the account in the blockchain 5 is referred to as a wallet). In this embodiment, regarding the tokens issued in the block chain 5, one unit of the legal currency received by the charity organization 2 is equal to one token (i.e. the token may be a stable coin pegged to a legal currency). The tokens according to the amount of money provided by the charity organization 2 to the beneficiary 3 are transferred from the wallet 51 of the charity organization 2 to the wallet 52 of the beneficiary 3, and the actual remittance of the legal currency to the beneficiary 3 is obtained as a trade information indicating the remittance of money from the account 41 of the charity organization 2 to the account 42 of the beneficiary 3 to verify that the token transfer coincides with the remittance of the legal currency. In this manner, the donation management system 10 of the embodiment allows the flow of the tokens to be managed in conjunction with the flow of the legal currency.

### <System Overview>

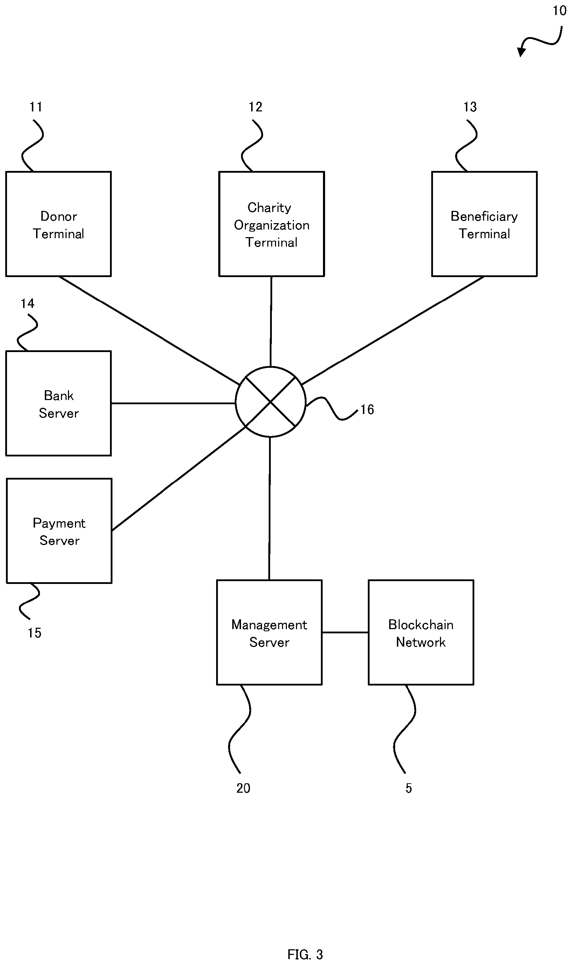

Fig. 3 is a diagram illustrating an example of an overall configuration of a system according to the present embodiment. The system of the embodiment includes a management server 20. The management server 20 is communicatively connected to the blockchain network 5 and may manage various types of information in a distributed ledger managed by the blockchain network 5. In addition, it assumes that the blockchain network 5 is a general blockchain network consisting of a plurality of computer nodes, and the detailed explanation of the name is omitted. The management server 20 is also communicatively connected to a donor terminal 11 of the donor 1, a charity terminal 12 of the charity organization 2, a beneficiary terminal 13 of the beneficiary 3, a bank server 14 of the bank 4, and a payment server 15 via a communication network 16. The communication network 16 is, for example, the Internet and may be constructed by a public telephone network, a cellular telephone network, a wireless communication line, an Ethernet (registered trademark), or the like.

### <Hardware Configuration>

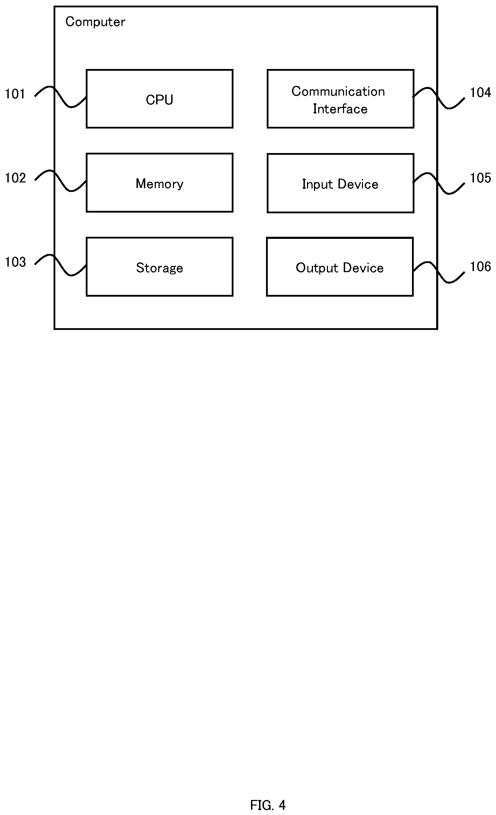

Fig. 4 is a diagram illustrating an example of a hardware configuration of a computer. The donor terminal 11, the charity terminal 12, the beneficiary terminal 13, the bank server 14, the payment server 15, management server 20, and the computer nodes consisting the blockchain network 5 may all have the hardware configuration shown in FIG. 4. The illustrated configuration is exemplary and may have the other configuration. The computer shown in FIG. 4 may also be a general purpose computer, such as a workstation or personal computer, or may be logically implemented by cloud computing.

The computer includes a CPU 01, a memory 102, a storage 103, a communication interface 104, an input device 105, and an output device 106. The storage device 103 may be, for example, a hard disk drive, a solid state drive, a flash memory, or the like, for storing various types of data or programs. The communication interface 104 is an interface for connecting to the communication network 16, such as an adapter for connecting to the Ethernet (registered trademark), a modem for connecting to the public telephone network, a wireless communication device for performing wireless communication, or a USB (Universal Serial Bus) connector or an RS232C connector for serial communication. The input device 105 may be, for example, a keyboard or mouse, a touch panel, a button, a microphone, or the like, for inputting data. The output device 106 may be, for example, a display, a printer, a speaker, or the like, for outputting data.

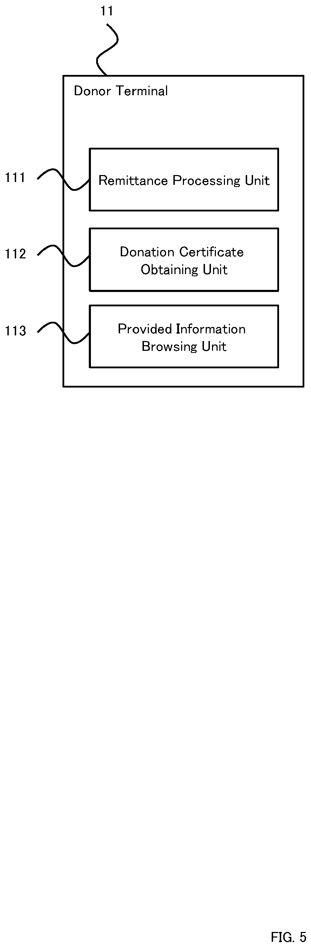

Fig. 5 is a diagram illustrating an example of a software configuration of a donator terminal 11. The donor terminal 11 includes a remittance processing unit 111, a donation certificate obtaining unit 112, and a provided information browsing unit 113. Note that each of these functional sections may be implemented by the CPU 101 reading out a program stored in the storage device 103 into the memory 102 and executing it at the donor terminal 11.

The remittance processing unit 111 processes the remittance of the donation. In this embodiment, it assumes that the management server 20 as described below collects donations using the payment service provided by the payment server 15. Therefore, the remittance processing unit 111 can perform the remittance processing, for example, by transmitting a remittance request pertaining to the payment service.

The donation certificate obtaining unit 112 may obtain a certificate from the management server 20 regarding the use of the donation (the beneficiary 3 and the amount provided to the beneficiary 3). The obtained certificate may be recorded in the storage device 103 or the like of the donor terminal 11.

The provided information browsing unit 113 browses information representing the use of donations (hereinafter referred to as the provided information). For example, the provided information browsing unit 113 may access the management server 20 using the HTTP protocol and view the provided information in the form of a web page.

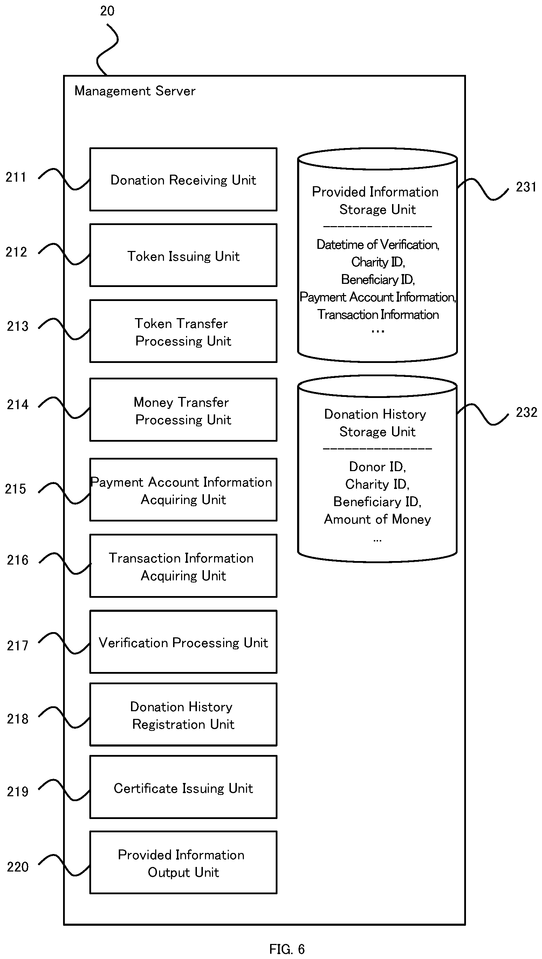

Fig. 6 is a diagram illustrating an example of a software configuration of a management server 20. The management server 20 includes a donation receiving unit 211, a token issuing unit 212, a token transfer processing unit 213, a money transfer processing unit 214, a payment account information acquiring unit 215, a transaction information acquiring unit 216, a verification processing unit 217, a donation history registration unit 218, a certificate issuing unit 219, a provided information output unit 220, a provided information storage unit 231, and a donation history storage unit 232.

The donation receiving unit 211, the token issuing unit 212, the token transfer processing unit 213, the money transfer processing unit 214, the payment account information acquiring unit 215, the transaction information acquiring unit 216, the verification processing unit 217, the donation history registration unit 218, the certificate issuing unit 219, and the provided information output unit 220 are implemented by CPU 101 reading out a program stored in the storage device 103 into the memory 102 and executing it at the management server 20, and the provided information storage unit 231 and the donation history storage unit 232 are implemented as part of the storage area provided by the memory 102 and the storage area of the management server 20.

The donation receiving unit 211 receives donations. In this embodiment, the donation receiving unit 211 may collect the donation by charging the donator 1 using the payment service provided by the payment server 15. The donation receiving unit 211 may collect, for example, system usage fees and handling fees. The donation (which may be the amount of fees from which the handling fee, etc. is reduced) is deposited to the payment account of the charity organization 2 in the payment service. The donation receiving unit 211 may also, for example, transmit a request to the payment server 15 to process a deposit from the payment account of the charity organization 2 into the account 41 of the charity organization 2 in the bank 4.

The token issuing unit 212 issues a token in the blockchain network 5. In the embodiment, the token issuing unit 212 issues a token of the same amount as the donated amount. The token issuing unit 212 issues a token to the donor 1, and the issued token may be registered in the wallet 53 of the donor 1.

The token transfer processing unit 213 performs the transfer processing of the token. The token transfer processing unit 213 may transfer the specified token from the wallet 51 of the charity organization 2 to the wallet 52 of the beneficiary 3 by issuing a transaction that transfers the token from the charity organization 2 to the beneficiary 3 according to the instruction from the charity terminal 12. In the instruction from the charity terminal 12, the amount to be provided to the beneficiary 3 (i.e. the amount of tokens to be transferred) is specified.

The money transfer processing unit 214 pays the donation to the charity organization 2 and the beneficiary 2. The money transfer processing unit 214 handles the transfer of money from the payment account of the charity organization 2 to the account 41 of the charity organization 2 in the bank 4. The money transfer processing unit 214 may, for example, transfer money by sending a request to the payment server 15. The transfer of money from the account 41 of the charity organization 2 to the account 41 of the beneficiary 3 is executed by the charity organization 2.

The payment account information acquiring unit 215 acquires information of the payment account (hereinafter referred to as the payment account information) regarding the payment service. The payment account information acquiring unit 215 may acquire the payment account information using, for example, an API (Application Programming Interface) provided by the payment server 15. The payment account information acquiring unit 215 shall acquire the payment account information of the charity organization 2 regarding the payment account to which the charged donation is to be deposited.

The transaction information acquiring unit 216 acquires information (hereinafter referred to as the transaction information) concerning the transaction (including deposit, disbursement, or transfer) related to the account in the bank 4. The transaction information acquiring unit 216 may, for example, access the bank server 14 to acquire the transaction information or may accept the input of the transaction information from an operator.

The verification processing unit 217 verifies that the movement of the token between wallets in the blockchain network 5 matches the movement of money between accounts in the bank 4. The verification processing unit 217 may acquire a history of the movement of the token in the blockchain network 5 from the blockchain. The verification processing unit 217 may compare the movement history of the token with the transaction information to verify the consistency between the movement of the token and the transfer of money. When the transfer of money to the beneficiary 3 coincides with the transfer of the token, the verification processing unit 217 may create the provided information and register it in the provided information storage unit 231.

The provided information storage unit 231 stores the provided information. The provided information is information indicating that the donation was provided to the beneficiary 3. As shown in FIG. 6, the provided information includes the payment account information and the transaction information, corresponding to the datetime of verification, the charity ID representing the charity organization 2, and the beneficiary ID representing the beneficiary 3.

The donation history registration unit 218 registers the donation history by the donor 1. The donation history registration unit may register the donation history in the donation history storage unit 232. In this embodiment, the donation history registration unit 218 registers the donation history at the time when the donation is provided to the beneficiary 3.

The donation history storage unit 232 stores the donation history. The donation history includes a charity ID indicating the charity organization 2 who raised the donation, a beneficiary ID representing the beneficiary 3 to which the charity organization 2 provided the money, the amount of the money provided to the beneficiary 3 in connection with the donor ID representing the donor 1.

The certificate issuing unit 219 issues a certificate of that the donation have been delivered to the beneficiary 3. The certificate issuing unit 219 may issue a certificate on the condition of that the verification by the verification processing unit 217 described above is successful.

The provided information output unit 220 (corresponding to the tracking information display unit of the present invention) outputs the provided information. For example, the provided information output unit 220 may output the provided information as a web page. The provided information output unit 220 may provide the analysis result after performing various analyses on the provided information. For example, the provided information output unit 220 may provide information indicating how much money is provided for each beneficiary 3. The provided information output unit 220 may, for example, execute aggregation for each attribute of the donor 1 and provide information indicating that the donation from which donor 1 has been delivered to which beneficiary 3.

### <Manage the flow of donations>

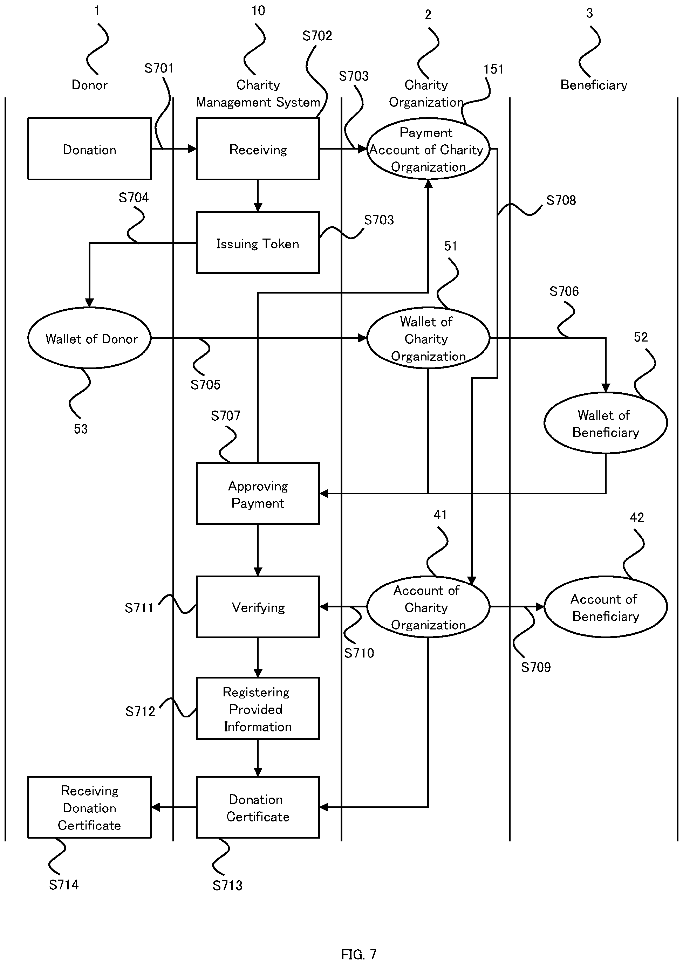

Fig. 7 is a diagram illustrating a structure of donation management in the donation management system according to the present embodiment.

The donor 1 transfers donation to the donation management system 10 using the donor terminal 11 (S701). The management server 20 of the donation management system 10, for example, receives donation from the donor 1 in the legal currency using the payment agency service provided by the payment server 15 (S702), and the received donation is deposited into the payment account 151 of the payment service for the charity organization 2 (S703). Here, the management server 20 may deposit money into the payment account 151 by subtracting the handling fee from the donation.

On the other hand, the management server 20 issues tokens the amount of which is equal to the amount of the received donation (S703), and the issued tokens are registered in the wallet 53 of the donor 1 (S704). The tokens are transferred from the wallet 53 of the donator 1 to the wallet 51 of the charity organization 2 (S705). Here, the management server 20 may transfer the tokens corresponding to the handling fee from the wallet 51 of charity organization 2 to the wallet of the system.

According to the instruction from the charity terminal 12, the management server 20 transfers the tokens, the amount of which is equal to the money provided from the charity organization 2 to the beneficiary 3, from the wallet 51 of the charity organization 2 to the wallet 52 of the beneficiary 3 (S706). Then, the management server 20 confirms the transfer of the tokens from the wallet 51 to the wallet 52 in response to the conversion order from the charity terminal 12 and approves the payment (S707) and remits the donation from the payment account 151 to the account 41 of charity organization 2 in the bank 44 (S708).

The charity organization 2 execute money transfer such as bank transfer from the account 41 to the account 42 of the beneficiary 3 in the bank 4 (S709). The management server 20 may not execute the process of this money transfer between the accounts 41 and 42.

The management server 20 acquires the transaction information from the bank server 14 (S710) and verifies that the transfer of the tokens matches the transfer of the money between the accounts 41 and 42 (S711). Upon successful verification, the management server 20 may generate the provided information and register it into the provided information storage unit 231 (S712).

The management server 20 issues a certificate indicating that the donation has been distributed to the beneficiary 3 (S713), and the donor 1 may obtain the certificate using the donor terminal 11 (S714).

As described above, according to the donation management system 10 of this embodiment, the flow of the donation from the donor 1 to the beneficiary 3 can be figured out. Further, according to the donation management system 10 of this embodiment, the use of the donation by the charity organization 2 can be managed. Further, according to the donation management system 10 of this embodiment, in addition to that the flow of the donation can be managed by the token of the blockchain 5 that is difficult to tamper with, the flow of the donation can be verified with the transaction information of the bank 4, thereby it is possible to improve the reliability of the flow of the donation.

Although the embodiment has been described above, the above-described embodiment is intended to facilitate the understanding of the present invention and is not intended to be a limiting interpretation of the present invention. The present invention may be modified and improved without departing from the spirit thereof, and the present invention also includes its equivalent.

For example, although the donation management system 10 according to the present embodiment manages the flow of the donation from the donor 1, it is possible to operate the system as a monetary management system that manages the flow of money from the transferor to the transferee. The transfer includes entrustment, contracting, and deposit. In this case, the transferor may figure out the use of money by the transferee. For example, it is possible to trace the uses of the invested money invested by investors in the investee. For example, an asset manager who has entrusted an asset to an asset management company can track where the asset management company has invested its assets. In addition, for example, taxpayers who pay taxes to national or local government can understand how national or local government use taxes.

In this embodiment, although it is assumed that the management server 20 receives payment from the donor 1 using the payment service provided by the payment server 15, for example, the management server 20 may receive the input such as the journal information in the accounting software or the customer management information provided by the CRM (Customer Relationship Management) system of the charity organization 2, or obtain them by using the API provided by those, from the journal information or customer management information obtained, it is possible to detect that the charity organization 2 has received the donation from the donor 1 and to issue a token accordingly. In this case, it is not required to process the remittance from the payment account to the account of the bank 4. Thus, while the charity organization 2 raises donations from donors 1 by itself, the donation management system 10 according to this embodiment can be used after collection of donations to manage the flow of donations using tokens in blockchain 5 to make it difficult to tamper with.

In this embodiment, although the token is to be issued and transferred in accordance with the payment service and instructions from the charity organization 2, the token may be issued and transferred based on the transaction information relating to the account 41 of the bank 4. In this case, the management server 20 may acquire the transaction information from the charity terminal 12 to issue and transfer tokens, and may compare the transaction information obtained by the management server 20 itself from the bank server 14 with the movement of the token to perform verification. The management server 20 may also issue and transfer tokens based on transaction information obtained from the bank server 14 and may, for example, verify journal entry data obtained from the accounting software used by the charity organization 2 or the customer management data obtained from the CRM software used by the charity organization 2 in comparison with the token movement. That is, the validity of the issuance and transfer of tokens may be verified using data different from the data on which the tokens are issued and transferred.

### [Explanation of symbols]

1 donor
2 charity organization
3 beneficiary
4 bank
5 blockchain network
11 donor terminal
12 charity terminal
13 beneficiary terminals
14 bank server
15 payment Server
16 communication network
20 management server
41 account
42 account
51 wallet
52 wallet
111 remittance processing unit
112 donation certificate obtaining unit
113 provided information browsing unit
211 donation receiving unit
212 token issuing unit
213 token transfer processing unit
214 money transfer processing unit
215 payment account information acquiring unit
216 transaction information acquiring unit
217 verification processing unit
218 donation history registration unit
219 certificate issuing unit
220 provided information output unit
231 provided information storage unit
232 donation history storage unit

## Claims

1. A money management system comprising:
a token issuing unit that issues a token of a blockchain according to an amount of transferred money from a transferor to a transferee;
a token transfer processing unit that transfers the token in response to a transfer of all or part of the transferred money from the transferee;
a transaction information aquisition unit that aquires transaction information indicating a transaction between accounts in a financial institution;
a verification processing unit that verifies a correspondence between the transferred token and the transaction.

2. A donation management comprising:
a token issuing unit that issues a token of a blockchain according to an amount of donation;
a token transfer processing unit that transfers the token in response to a remittance of the donation;
a transaction information acquiring unit that acquires transaction information indicating a transaction between accounts in a financial institution;
a verification processing unit that verifies a correspondence between the transferred token and the transaction.

3. The donation management system according to claim 2, wherein:
the token issuing unit issues the token according to the amount of the donation to the account of the donor in the blockchain;
the token transfer processing unit transfers the token, in response to a remittance of the donation to a first account of an organization, from the account of the donator to an account of the organization in the blockchain;
the token transfer processing unit transfers the token, in response to an input indicating that a remittance from the first account to a second account of a beneficiary, from the account of the organization to an account of the beneficiary in the blockchain;
the transaction information acquiring unit acquires the transaction information representing a transaction from the first account to the second account;
the verification processing unit verifies that the amount of the tokens transferred from the account of the organization to the account of the beneficiary corresponds to the amount transferred from the first account to the second account.

4. The donation management system according to claim 3 further comprising:
a certificate issuing unit that issues a certificate certifying that the the donation has been paid to the beneficiary if the verification is successful.

5. A donation management system according to claim 3 or 4 further comprising:
a tracking information display unit that displays an amount which has been remitted to the beneficiary from the donor for each donor, the amount within the amount of the donation from the donor.

6. A method executed by a computer to manage money, the method comprising:
a step of issuing a token of a blockchain according to an amount of transferred money from a transferor to a transferee;
a step of transferring the token in response to a transfer of all or part of the transferred money from the transferee;
a step of acquiring transaction information indicating a transaction between accounts in a financial institution;
a step of verifying a correspondence between a transfer of the token and the transaction.

7. A method executed by a computer to manage donation, the method comprising:
a step of issuing a token of a blockchain according to an amount of donation;
a step of transferring the token in response to a remittance of the donation;
a step of acquiring transaction information indicating a transaction between accounts in a financial institution;
a step of verifying a correspondence between the transfer of the token and the transaction.

8. A method executed by a computer to manage donation, the method comprising:
a step of issuing a token according to an amount of a donation to an account of a donor in a blockchain;
a step of transferring the token, in response to a remittance of the donation to a first account of an organization, from the account of the donator to an account of the organization in the blockchain;
a step of transferring the token, in response to an input indicating that a remittance from the first account to a second account of a beneficiary, from the account of the organization to an account of the beneficiary in the blockchain;
a step of acquiring the transaction information representing a transaction from the first account to the second account;
a step of verifying that the amount of the tokens transferred from the account of the organization to the account of the beneficiary corresponds to the amount transferred from the first account to the second account.

9. A program causing a computer to execute:
a step of issuing a token of a blockchain according to an amount of transferred money from a transferor to a transferee;
a step of transferring the token in response to a transfer of all or part of the transferred money from the transferee;
a step of acquiring transaction information indicating a transaction between accounts in a financial institution;
a step of verifying a correspondence between a transfer of the token and the transaction.

10. A program causing a computer to execute:
a step of issuing a token of a blockchain according to an amount of donation;
a step of transferring the token in response to a remittance of the donation;
a step of acquiring transaction information indicating a transaction between accounts in a financial institution;
a step of verifying a correspondence between the transfer of the token and the transaction.

11. A program causing a computer to execute:
a step of issuing a token according to an amount of a donation to an account of a donor in a blockchain;
a step of transferring the token, in response to a remittance of the donation to a first account of an organization, from the account of the donator to an account of the organization in the blockchain;
a step of transferring the token, in response to an input indicating that a remittance from the first account to a second account of a beneficiary, from the account of the organization to an account of the beneficiary in the blockchain;
a step of acquiring the transaction information representing a transaction from the first account to the second account;
a step of verifying that the amount of the tokens transferred from the account of the organization to the account of the beneficiary corresponds to the amount transferred from the first account to the second account.
